# EUROPEAN PATENT APPLICATION

(11) **EP 4 686 051 A1**
(43) Date of publication of application: **28.01.2026**
(21) Application number: 25775477.0
(22) Date of filing: 27.03.2025
(51) Int. Cl.: H02K 9/19, F04B 39/06, F04D 29/58, H02K 7/09, H02K 7/14

(54) **COMPRESSOR AND REFRIGERATION DEVICE**

(30) Priority: 28.03.2024 JP 2024054770
(71) Applicant: Daikin Industries, Ltd., Osaka-shi, Osaka 530-0001 (JP)
(72) Inventor: KUBO, Koichi, Osaka-shi, Osaka 530-0001 (JP); TANAKA, Koichi, Osaka-shi, Osaka 530-0001 (JP)
(74) Representative: Goddar, Heinz J.
(86) International application number: PCT/JP2025/012565
(87) International publication number: WO 2025/206217

(57) **Abstract**

A compressor (10) compresses a refrigerant (W). The compressor includes an electric motor (20) and a compression mechanism (30) operated by the electric motor. The compression mechanism includes an impeller (31) rotated by the electric motor. The electric motor includes a drive shaft (21), a rotor (22) fixed to the drive shaft, and a stator (23) disposed on an outer peripheral side (R1) than the rotor. The drive shaft and the rotor include a refrigerant passage (40) in which the refrigerant flows. The refrigerant passage includes a shaft passage (50) extending in an interior (211) of the drive shaft from a first direction side (X1) in an axial direction (X) to a second direction side (X2) in the axial direction (X) which is opposite to the first direction side and on which the impeller is disposed, and a communication passage (60) communicating a gap (A) between the rotor and the stator with the shaft passage.

## Description

### TECHNICAL FIELD

The present disclosure relates to a compressor and a refrigeration apparatus.

### BACKGROUND ART

Various techniques about electric motors for operating compressors and pumps are disclosed as shown in Patent Document 1, for example. The electric motor includes a drive shaft, a rotor fixed to the drive shaft, and a stator disposed on an outer peripheral side than the rotor.

### CITATION LIST

### PATENT DOCUMENT

Patent Document 1: Japanese Unexamined Patent Publication No. 2020-159538

### SUMMARY OF THE INVENTION

### TECHNICAL PROBLEM

When the electric motor is operating, the rotor and the stator generate heat. Thus, it is necessary to cool the rotor and the stator by some means. It is impossible to cool the rotor and the stator of prior electric motors effectively.

An object of the present disclosure is to cool a rotor and a stator of an electric motor effectively.

### SOLUTION TO THE PROBLEM

A first aspect of the present disclosure is directed to a compressor (10). The compressor (10) compresses a refrigerant (W). The compressor (10) includes: an electric motor (20); and a compression mechanism (30) operated by the electric motor (20), wherein the compression mechanism (30) includes an impeller (31) rotated by the electric motor (20), the electric motor (20) includes a drive shaft (21), a rotor (22) fixed to the drive shaft (21), and a stator (23) disposed on an outer peripheral side (R1) than the rotor (22), the drive shaft (21) and the rotor (22) include a refrigerant passage (40) in which the refrigerant (W) flows, and the refrigerant passage (40) includes a shaft passage (50) extending in an interior (21i) of the drive shaft (21) from a first direction side (X1) in an axial direction (X) to a second direction side (X2) in the axial direction (X) which is opposite to the first direction side (X1) and on which the impeller (31) is disposed, and a communication passage (60) communicating a gap (A) between the rotor (22) and the stator (23) with the shaft passage (50).

According to the first aspect, the refrigerant (W) is more easily supplied to the gap (A) between the rotor (22) and the stator (23) of the electric motor (20), and thus it is possible to cool the rotor (22) and the stator (23) of the electric motor (20) effectively.

A second aspect of the present disclosure is directed to the compressor (10) of the first aspect. The shaft passage (50) is open to a first shaft end surface (21a) of the drive shaft (21) on the first direction side (X1) in the axial direction (X).

According to the second aspect, the refrigerant (W) flows into the shaft passage (50) from the first shaft end surface (21a) of the drive shaft (21), and then flows in the shaft passage (50) from the first direction side (X1) to the second direction side (X2) in the axial direction (X). It is possible for the refrigerant (W) to smoothly flow into the shaft passage (50).

A third aspect of the present disclosure is directed to the compressor (10) of the first or second aspect. The communication passage (60) is open to an outer peripheral surface (22a) of the rotor (22).

According to the third aspect, the refrigerant (W) flows from the shaft passage (50) into the communication passage (60), and then flows in the communication passage (60) to the outer peripheral side (R1) by centrifugal force of the drive shaft (21) and the rotor (22). The refrigerant (W) is supplied from the outer peripheral surface (22a) of the rotor (22) to the gap (A) between the rotor (22) and the stator (23). It is possible to smoothly supply the refrigerant (W) to the gap (A) between the rotor (22) and the stator (23) of the electric motor (20).

A fourth aspect of the present disclosure is directed to the compressor (10) of any one of the first to third aspects. If a length from a first rotor end surface (22b) of the rotor (22) on the first direction side (X1) in the axial direction (X) to a second rotor end surface (22c) of the rotor (22) on the second direction side (X2) in the axial direction (X) is defined as L, and if the rotor (22) is divided into a first region (C1) defined at 1/4L from the first rotor end surface (22b) toward the second rotor end surface (22c) in the axial direction (X); a second region (C2) defined at 1/4L from the second rotor end surface (22c) toward the first rotor end surface (22b) in the axial direction (X); and a third region (C3) defined at 1/2L between the first region (C1) and the second region (C2), a first passage volume (V1) of the communication passage (60) per unit length in the axial direction (X) in the first region (C1) or a second passage volume (V2) of the communication passage (60) per unit length in the axial direction (X) in the second region (C2) is larger than a third passage volume (V3) of the communication passage (60) per unit length in the axial direction (X) in the third region (C3).

According to the fourth aspect, by making the first passage volume (V1) or the second passage volume (V2) larger than the third passage volume (V3), it is possible to intensively supply the refrigerant (W) to the gap (A) between the rotor (22) and the stator (23) in the first region (C1) or the second region (C2) as compared with the third region (C3).

A fifth aspect of the present disclosure is directed to the compressor (10) of the fourth aspect. A first average cross-sectional area (S1) of the communication passage (60) in the first region (C1) or a second average cross-sectional area (S2) of the communication passage (60) in the second region (C2) is larger than a third average cross-sectional area (S3) of the communication passage (60) in the third region (C3).

According to the fifth aspect, by making the first average cross-sectional area (S1) or the second average cross-sectional area (S2) larger than the third average cross-sectional area (S3), it is possible to easily make the first passage volume (V1) or the second passage volume (V2) larger than the third passage volume (V3).

A sixth aspect of the present disclosure is directed to the compressor (10) of the fourth aspect. A first pitch (P1) between the communication passages (60) adjacent in the axial direction (X) to each other in the first region (C1) or a second pitch (P2) between the communication passages (60) adjacent in the axial direction (X) to each other in the second region (C2) is smaller than a third pitch (P3) between the communication passages (60) adjacent in the axial direction (X) to each other in the third region (C3).

According to the sixth aspect, by making the first pitch (P1) or the second pitch (P2) smaller than the third pitch (P3), it is possible to easily make the first passage volume (V1) or the second passage volume (V2) larger than the third passage volume (V3).

A seventh aspect of the present disclosure is directed to the compressor (10) of any one of the second to sixth aspects. If a length from a first rotor end surface (22b) of the rotor (22) on the first direction side (X1) in the axial direction (X) to a second rotor end surface (22c) of the rotor (22) on the second direction side (X2) in the axial direction (X) is defined as L, the communication passage (60) that is most distant from the first rotor end surface (22b) toward the second rotor end surface (22c) of the rotor (22) in the axial direction (X) is disposed at 1/4L or more from the first rotor end surface (22b) toward the second rotor end surface (22c) of the rotor (22) in the axial direction (X).

According to the seventh aspect, it is possible for the refrigerant (W) to cool the rotor (22) and the stator (23) even in a region a long away from the first shaft end surface (21a) of the drive shaft (21) (the opening of the shaft passage (50)) toward the second direction side (X2) in the axial direction (X).

An eighth aspect of the present disclosure is directed to the compressor (10) of any one of the first to seventh aspects. The communication passages (60) are disposed on both the first direction side (X1) and the second direction side (X2) with respect to a center (22m) of the rotor (22) in the axial direction (X).

According to the eighth aspect, it is possible for the refrigerant (W) to cool the rotor (22) and the stator (23) in both the region on the first direction side (X1) and the region on the second direction side (X2) with respect to the center (22m) of the rotor (22) in the axial direction (X).

A ninth aspect of the present disclosure is directed to the compressor (10) of any one of the first to eighth aspects. As viewed in the axial direction (X), the communication passage (60) extends to intersect a straight line (E) that extends from an axis (O) of the drive shaft (21) to a joint part (B) between the communication passage (60) and the shaft passage (50).

According to the ninth aspect, by changing the direction of the refrigerant (W) that flows in the communication passage (60), it is possible to apply not only the centrifugal force of the drive shaft (21) and the rotor (22) but also the shaft power to the refrigerant (W) that flows in the communication passage (60). It is thus easier to supply the refrigerant (W) to the gap (A) between the rotor (22) and the stator (23).

A tenth aspect of the present disclosure is directed to the compressor (10) of any one of the first to ninth aspects. As viewed in the axial direction (X), the shaft passage (50) is formed in a ring shape to surround an axis (O) of the drive shaft (21).

According to the tenth aspect, the axis (O) of the drive shaft (21) surrounded by the shaft passage (50) in a ring shape is configured as the thick portion. It is possible to secure the strength of the drive shaft (21).

An eleventh aspect of the present disclosure is directed to the compressor (10) of any one of the first to tenth aspects. The shaft passage (50) is formed in a tapered shape so that a diameter of the shaft passage (50) gradually decreases from the first direction side (X1) to the second direction side (X2) in the axial direction.

According to the eleventh aspect, it is possible to squeeze the refrigerant (W) as the refrigerant (W) flows in the shaft passage (50) from the first direction side (X1) to the second direction side (X2). It is possible to reduce the restriction of the refrigerant (W) sent from the shaft passage (50) to the communication passage (60) due to the pressure of the refrigerant (W) decreasing on the second direction side (X2) of the shaft passage (50).

A twelfth aspect of the present disclosure is directed to the compressor (10) of any one of the first to eleventh aspects. the electric motor (20) includes a casing (24) that houses the drive shaft (21), the rotor (22), and the stator (23), the casing (24) includes a discharge passage (25) that discharges the refrigerant (W) flowing from the refrigerant passage (40), and the discharge passage (25) is provided with a pump (26) that accelerates discharge of the refrigerant (W).

According to the twelfth aspect, due to the pump (26), it is possible to smoothly discharge the refrigerant (W) from the refrigerant passage (40) through the discharge passage (25).

A thirteenth aspect of the present disclosure is directed to the compressor (10) of any one of the first to twelfth aspects. The electric motor (20) includes a cooler (2) configured to cool the refrigerant (W) before the refrigerant (W) flows into the refrigerant passage (40).

According to the thirteenth aspect, the refrigerant (W) before flowing into the refrigerant passage (40) is cooled by the cooler (2), which advantageously allows the refrigerant (W) to cool the rotor (22) and the stator (23).

A fourteenth aspect of the present disclosure is directed to the compressor (10) of any one of the first to thirteenth aspects. The communication passage (60) is disposed only at one particular position (G) in the axial direction (X).

According to the fourteenth aspect, it is possible to reduce the number of holes bored in the rotor (22) to form the communication passage (60), and thus it is possible to reduce deterioration in the performance of the electric motor (20).

A fifteenth aspect of the present disclosure is directed to the compressor (10) of any one of the first to fourteenth aspects. If a length from a first rotor end surface (22b) of the rotor (22) on the first direction side (X1) in the axial direction (X) to a second rotor end surface (22c) of the rotor (22) on the second direction side (X2) in the axial direction (X) is defined as L, and if the rotor (22) is divided into a first region (C1) defined at 1/4L from the first rotor end surface (22b) toward the second rotor end surface (22c) in the axial direction (X); a second region (C2) defined at 1/4L from the second rotor end surface (22c) toward the first rotor end surface (22b) in the axial direction (X); and a third region (C3) defined at 1/2L between the first region (C1) and the second region (C2), the communication passage (60) is disposed in only the first region (C1) or only the second region (C2).

Since the communication passage (60) are disposed in only the first region (C1) or only the second region (C2), the communication passage (60) are disposed in only the vicinity of the first rotor end surface (22b) or only the vicinity of the second rotor end surface (22c). It is possible to reduce the number of holes bored in the rotor (22) to form the communication passage (60), and thus it is possible to reduce deterioration in the performance of the electric motor (20).

A sixteenth aspect of the present disclosure is directed to a refrigeration apparatus (1). The refrigeration apparatus (1) includes the compressor (10) of any one of the first to fifteenth aspects.

### BRIEF DESCRIPTION OF THE DRAWINGS

[FIG. 1] FIG. 1 shows an electric motor (20), a compressor (10), and a refrigeration apparatus (1) of the first embodiment.
[FIG. 2] FIG. 2 is a cross-sectional view of the electric motor (20) of the first embodiment.
[FIG. 3] FIG. 3 is an enlarged cross-sectional view of the electric motor (20) of the first embodiment.
[FIG. 4] FIG. 4 is a cross-sectional view of the electric motor (20) of the first embodiment as viewed in the axial direction (X).
[FIG. 5] FIG. 5 is an enlarged cross-sectional view of an electric motor (20) of the second embodiment.
[FIG. 6] FIG. 6 is an enlarged cross-sectional view of an electric motor (20) of the third embodiment.
[FIG. 7] FIG. 7 is an enlarged cross-sectional view of an electric motor (20) of the fourth embodiment.
[FIG. 8] FIG. 8 is an enlarged cross-sectional view of an electric motor (20) of the fifth embodiment.
[FIG. 9] FIG. 9 is an enlarged cross-sectional view of an electric motor (20) of the sixth embodiment.
[FIG. 10] FIG. 10 is an enlarged cross-sectional view of an electric motor (20) of the seventh embodiment.
[FIG. 11] FIG. 11 is a cross-sectional view of the electric motor (20) of the seventh embodiment as viewed in the axial direction (X).
[FIG. 12] FIG. 12 is a cross-sectional view of an electric motor (20) of the eighth embodiment as viewed in the axial direction (X).
[FIG. 13] FIG. 13 is an enlarged cross-sectional view of an electric motor (20) of the ninth embodiment.
[FIG. 14] FIG. 14 is an enlarged cross-sectional view of an electric motor (20) of the tenth embodiment.
[FIG. 15] FIG. 15 is an enlarged cross-sectional view of an electric motor (20) of the eleventh embodiment.
[FIG. 16] FIG. 16 is an enlarged cross-sectional view of an electric motor (20) of the twelfth embodiment.

### DESCRIPTION OF EMBODIMENTS

Embodiments of the present disclosure will be described in detail below with reference to the drawings. The present disclosure is not limited to the embodiments below, and various changes can be made within the scope without departing from the technical concept of the present disclosure. Since each of the drawings is intended to illustrate the present disclosure conceptually, dimensions, ratios, or numbers may be exaggerated or simplified as necessary for ease of understanding.

### <First Embodiment>

### (Refrigeration Apparatus)

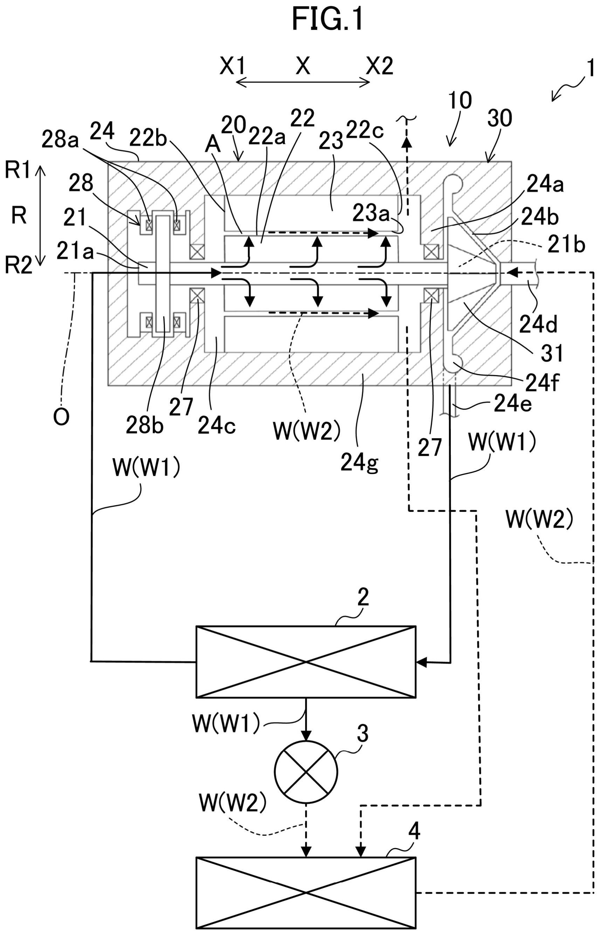

An electric motor (20), a compressor (10), and a refrigeration apparatus (1) of the first embodiment will be described. FIG. 1 shows the electric motor (20), the compressor (10), and the refrigeration apparatus (1). The refrigeration apparatus (1) includes a refrigerant circuit. A refrigerant (W) circulates in the refrigerant circuit of the refrigeration apparatus (1). The refrigerant circuit of the refrigeration apparatus (1) includes the compressor (10), a condenser (2), a decompression mechanism (expansion mechanism) (3), and an evaporator (4).

The compressor (10) compresses the refrigerant (W). Specifically, the compressor (10) compresses the low-temperature low-pressure gas refrigerant (W) into a high-temperature high-pressure state. The condenser (2) cools, condenses, and liquefies the high-temperature high-pressure gas refrigerant (W) into a low-temperature high-pressure liquid state. The condenser (2) is an example of a cooler (2) of this example. The decompression mechanism (3) decompresses the low-temperature high-pressure liquid refrigerant (W) into a low-temperature low-pressure liquid state. For example, the decompression mechanism (3) is an expansion valve, a capillary tube, or the like. The evaporator (4) evaporates the low-temperature low-pressure liquid refrigerant (W) into a low-temperature low-pressure gas state.

FIG. 1 shows the refrigerant (W) that circulates in the refrigerant circuit of the refrigeration apparatus (1), where a high-pressure refrigerant (W1) is indicated by the solid arrows, and a low-pressure refrigerant (W2) is indicated by the dashed arrows.

### (Compressor)

The compressor (10) is a turbo compressor. The compressor (10) compresses the refrigerant (W) into a high pressure state by centrifugal force of an impeller (31) described later. The compressor (10) includes the electric motor (20) and a compression mechanism (30).

### (Electric Motor)

The electric motor (20) includes a drive shaft (21), a rotor (22), a stator (23), a casing (24), touchdown bearings (27), and a thrust magnetic bearing (28). The drive shaft (21) and the casing (24) are shared by the electric motor (20) and the compression mechanism (30). In this example, the rotor (22) and the stator (23) function as a bearingless motor, and thus a radial bearing is not required.

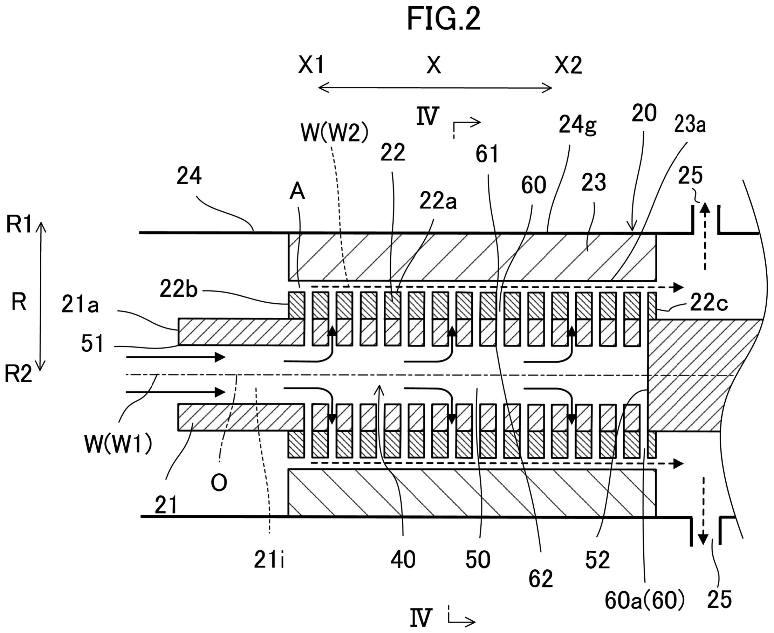

The direction in which the axis (O) of the drive shaft (21) extends is hereinafter referred to as the "axial direction (X)." One side in the axial direction (X) (the left side in FIG. 2) is referred to as the "rear side (X1)." The rear side (X1) is an example of a first direction side (X1) of this example. The other side in the axial direction (X) (the right side in FIG. 2) is referred to as the "front side (X2)." The front side (X2) is an example of a second direction side (X2) of this example. The front side (X2) is the side on which the compression mechanism (30) such as the impeller (31) is disposed. The rear side (X1) is opposite to the side on which the compression mechanism (30) such as the impeller (31) is disposed. In the axial direction (X), the front side (X2) is opposite to the rear side (X1), and the rear side (X1) is opposite to the front side (X2). The direction orthogonal to the axis (O) of the drive shaft (21) is referred to as the "radial direction (R)." The outer side in the radial direction (R) is referred to as the "outer peripheral side (R1)." The inner side in the radial direction (R) is referred to as the "inner peripheral side (R2)."

The drive shaft (21) is formed in a rod shape with a circular traverse section, and extends in the axial direction (X).

The rotor (22) is cylindrical, and extends in the axial direction (X). The rotor (22) is fixed to the drive shaft (21). The rotor (22) rotates as the drive shaft (21) rotates. The stator (23) is cylindrical, and extends in the axial direction (X). The stator (23) is disposed on the outer peripheral side (R1) than the rotor (22) in the radial direction (R).

A gap (A) is formed between the outer peripheral surface (22a) of the rotor (22) and the inner peripheral surface (23a) of the stator (23). In the electric motor (20), the drive shaft (21) and the rotor (22) rotate integrally with respect to the stator (23) and the casing (24).

The casing (24) is formed in a cylindrical shape, both ends of which are closed. The casing (24) extends in the axial direction (X). The casing (24) houses the drive shaft (21), the rotor (22), the stator (23), the touchdown bearings (27), the thrust magnetic bearing (28), and the impeller (31).

The space in the casing (24) is partitioned by a wall (24a). A space on the front side (X2) in front of the wall (24a) forms an impeller chamber (24b). A space on the rear side (X1) than the wall (24a) forms an electric motor chamber (24c). The impeller (31) is housed in the impeller chamber (24b). The rotor (22), the stator (23), the touchdown bearing (27), and the thrust magnetic bearing (28) are housed in the electric motor chamber (24c). The drive shaft (21) penetrates the wall (24a), and is housed in both the impeller chamber (24b) and the electric motor chamber (24c).

The stator (23) is fixed to the inner peripheral surface of the casing (24). The number of touchdown bearings (27) is two. The two touchdown bearings (27) are disposed apart from each other in the axial direction (X). The touchdown bearings (27) are fixed to the casing (24). When the rotor (22) and the stator (23) do not function as a bearingless motor (not energized), the touchdown bearings (27) support the drive shaft (21) in the radial direction (R).

The thrust magnetic bearing (28) includes two electromagnets (28a). The two electromagnets (28a) are fixed to the casing (24). The two electromagnets (28a) support a disk (28b) provided on a rear end portion of the drive shaft (21) in a noncontact manner by electromagnetic force.

### (Compression Mechanism)

The compression mechanism (30) is located on the front side (X2) than the electric motor (20) in the axial direction (X). The compression mechanism (30) includes the impeller (31). The impeller (31) is fixed to the drive shaft (21) of the electric motor (20). The impeller (31) is rotated by the electric motor (20). Specifically, the drive shaft (21) of the electric motor (20) rotates, whereby the impeller (31) of the compression mechanism (30) rotates. The compression mechanism (30) is operated by the electric motor (20). The compression mechanism (30) compresses the refrigerant (W).

The impeller (31) is housed in the impeller chamber (24b) while being fixed to a front end portion of the drive shaft (21). The impeller chamber (24b) is connected with a suction pipe (24d) and a discharge pipe (24e). A compression space (24f) is formed at an outer peripheral portion of the impeller chamber (24b). The suction pipe (24d) introduces the low-pressure refrigerant (W) from the outside into the impeller chamber (24b). The discharge pipe (24e) returns the high-pressure refrigerant (W) compressed in the impeller chamber (24b) to the outside.

### (Refrigerant Passage)

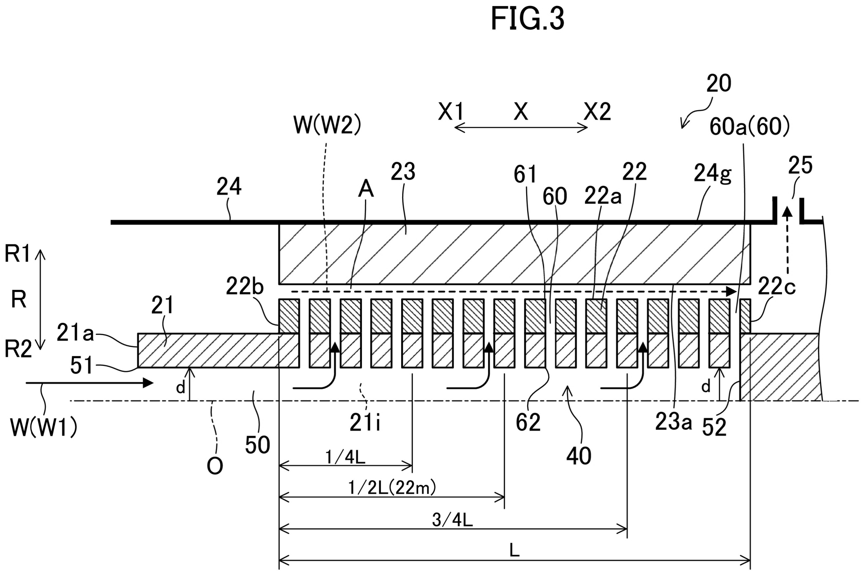

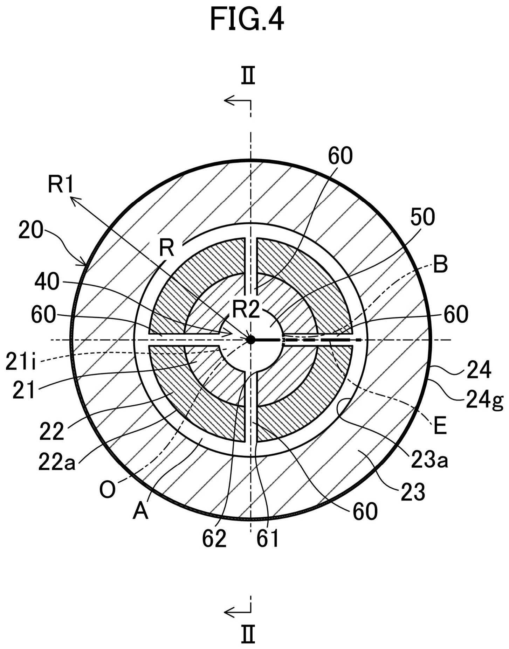

A refrigerant passage (40) will be described with reference to FIGS. 2 and 3. FIG. 2 is a cross-sectional view of the electric motor (20) of the first embodiment (taken along line II in FIG. 4). FIG. 3 is an enlarged cross-sectional view of the electric motor (20) of the first embodiment (an enlarged view of FIG. 2). For simplicity, some components of the electric motor (20) are omitted in FIGS. 2 and 3, and the dimensions and others may differ from those in FIG. 1.

The drive shaft (21) and the rotor (22) include the refrigerant passage (40). In the refrigerant passage (40), the refrigerant (W) flows. The refrigerant passage (40) includes a shaft passage (50) and communication passages (60).

The shaft passage (50) extends in the interior (21i) of the drive shaft (21) from the rear side (X1) to the front side (X2) in the axial direction (X).

The rear end (51) of the shaft passage (50) is open to the rear shaft end surface (21a) of the drive shaft (21) that is on the rear side (X1) in the axial direction (X). The rear shaft end surface (21a) is an example of a first shaft end surface (21a) of this example. The rear end (51) of the shaft passage (50) is at the same position in the axial direction (X) as the rear shaft end surface (21a) of the drive shaft (21).

The front end (52) of the shaft passage (50) is located at an intermediate portion of the interior (21i) of the drive shaft (21). The front end (52) of the shaft passage (50) is located on the rear side (X1) than the front shaft end surface (21b) (fitted into the impeller (31) in FIG. 1) of the drive shaft (21) in the axial direction (X). The front shaft end surface (21b) is an example of a second shaft end surface of this example.

The diameter (d) of the shaft passage (50) is constant from the rear side (X1) to the front side (X2) in the axial direction (X).

The communication passages (60) extend in the interior (211) of the drive shaft (21) and the interior of the rotor (22) from the inner peripheral side (R2) to the outer peripheral side (R1) in the radial direction (R). The outer ends (61) of the communication passages (60) are open to the outer peripheral surface (22a) of the rotor (22). The outer ends (61) of the communication passages (60) face the gap (A) between the outer peripheral surface (22a) of the rotor (22) and the inner peripheral surface (23a) of the stator (23). The inner ends (62) of the communication passages (60) face the shaft passage (50) in the interior (21i) of the drive shaft (21). The communication passages (60) communicate the gap (A) between the rotor (22) and the stator (23) with the shaft passage (50).

The length from the rear rotor end surface (22b) of the rotor (22) on the rear side (X1) in the axial direction (X) to the front rotor end surface (22c) of the rotor (22) on the front side (X2) in the axial direction (X) is defined as L. The rear rotor end surface (22b) is an example of a first rotor end surface (22b) of this example. The rear rotor end surface (22b) faces toward the rear side (X1). The front rotor end surface (22c) is an example of a second rotor end surface (22c) of this example. The front rotor end surface (22c) faces toward the front side (X2).

The rear rotor end surface (22b) and the front rotor end surface (22c) are disposed in the casing (24). The rear rotor end surface (22b) of the rotor (22) is located on the front side (X2) than the rear shaft end surface (21a) of the drive shaft (21) in the axial direction (X). The front rotor end surface (22c) of the rotor (22) is located on the rear side (X1) than the front shaft end surface (21b) of the drive shaft (21) in the axial direction (X).

The number of communication passages (60) is two or more. The plurality of communication passages (60) are arranged side by side in the axial direction (X). The plurality of communication passages (60) are arranged side by side in the circumferential direction of the axis (O) (see FIG. 4). The plurality of communication passages (60) have the same cross-sectional area. Among the plurality of communication passages (60), the pitch between the communication passages (60) adjacent in the axial direction (X) to each other is the same. The plurality of communication passages (60) have the same passage volume (the volume of the passage for the refrigerant (W) from the inlet (close to the shaft passage (50)) to the outlet (close to the gap (A)) of the communication passages (60)).

First communication passages (60a), the communication passages (60) that are most distant from the rear rotor end surface (22b) toward the front rotor end surface (22c) of the rotor (22) in the axial direction (X), are disposed at 1/4L or more from the rear rotor end surface (22b) toward the front rotor end surface (22c) of the rotor (22) in the axial direction (X).

Specifically, the first communication passage (60a) is disposed at 1/2L or more from the rear rotor end surface (22b) toward the front rotor end surface (22c) of the rotor (22) in the axial direction (X). More specifically, the first communication passage (60a) is disposed at 3/4L or more from the rear rotor end surface (22b) toward the front rotor end surface (22c) of the rotor (22) in the axial direction (X). In practice, the first communication passage (60a) is disposed slightly on a rear of the front rotor end surface (22c) (slightly on the rear side (X1)), and is disposed at slightly less than L (a value slightly smaller than L) from the rear rotor end surface (22b) toward the front rotor end surface (22c) of the rotor (22) in the axial direction (X).

The communication passages (60) are disposed on both the rear side (X1) and the front side (X2) in the axial direction (X) with respect to the center (22m) (1/2L) of the rotor (22) in the axial direction (X).

FIG. 4 is a cross-sectional view of the electric motor (20) of the first embodiment (taken along line IV in FIG. 2) as viewed in the axial direction (X). As viewed in the axial direction (X), the shaft passage (50) is formed in a circular shape of which the center is the axis (O) of the drive shaft (21).

The communication passages (60) generally extend in the radial direction (R). Specifically, as viewed in the axial direction (X), the communication passages (60) do not intersect but overlap the straight line (E) that extends from the axis (O) of the drive shaft (21) to the joint part (B) between the communication passages (60) and the shaft passage (50).

### (Discharge Passage)

Referring back to FIG. 2 and FIG. 3, the casing (24) includes a discharge passage (25). The discharge passage (25) is a discharge pipe provided on the outer peripheral wall (24g) of the casing (24). The discharge passage (25) extends in the radial direction (R). The discharge passage (25) is disposed on the outer peripheral side (R1) than the outer peripheral surface (22a) of the rotor (22). The discharge passage (25) is disposed on the front side (X2) than the front rotor end surface (22c) of the rotor (22) in the axial direction (X). The discharge passage (25) discharges the refrigerant (W) flowing from the refrigerant passage (40).

### (Flow of Refrigerant)

The flow of the refrigerant (W) will be described with reference to FIGS. 1 to 3. The low-temperature low-pressure gas refrigerant (W) flows into the compressor (10). The refrigerant (W) is compressed into a high-temperature high-pressure gas state by the compressor (10). Next, the high-temperature high-pressure gas refrigerant (W) flows into the condenser (2). The refrigerant (W) is cooled into a low-temperature high-pressure liquid state by the condenser (2). Next, part of the low-temperature high-pressure liquid refrigerant (W) having passed through the condenser (2) is decompressed into a low-temperature low-pressure liquid state by the decompression mechanism (3); and then is further evaporated into a low-temperature low-pressure gas state by the evaporator (4); and then is returned to the compressor (10).

The other part of the low-temperature high-pressure refrigerant (W) having passed through the condenser (2) is introduced into the refrigerant passage (40) of the electric motor (20) of the compressor (10). Specifically, as shown in FIG. 3, the low-temperature high-pressure refrigerant (W) flows into the rear end (51) of the shaft passage (50) from the opening at the rear shaft end surface (21a) of the drive shaft (21). The refrigerant (W) flows in the shaft passage (50) from the rear side (X1) to the front side (X2) in the axial direction (X), and then reaches the front end (52) of the shaft passage (50).

The refrigerant (W) flows into the communication passages (60) while flowing in the shaft passage (50). The refrigerant (W) flows in the communication passages (60) from the inner peripheral side (R2) to the outer peripheral side (R1) in the radial direction (R). The refrigerant (W) flows out of openings at the outer peripheral surface (22a) of the rotor (22), and then flows into the gap (A) between the rotor (22) and the stator (23). The high-pressure refrigerant (W) turns to a low pressure in the process of passing through the communication passages (60) and then reaching the gap (A). The low-pressure refrigerant (W) flows in the gap (A) from the rear side (X1) to the front side (X2) in the axial direction (X). The refrigerant (W) flows into the discharge passage (25) provided in the outer peripheral wall (24g) of the casing (24). The refrigerant (W) in the discharge passage (25) flows into the evaporator (4).

The refrigerant (W) exchanges heat with the rotor (22) and the stator (23) in the process of flowing in the gap (A) between the rotor (22) and the stator (23) in the axial direction (X), thereby cooling the rotor (22) and the stator (23) and also heating the refrigerant (W) itself.

The refrigerant (W) is cooled by the condenser (2) before flowing into the refrigerant passage (40). The condenser (2) functions as a cooler. That is, the electric motor (20) includes the condenser (2) serving as a cooler that cools the refrigerant (W) before the refrigerant (W) flows into the refrigerant passage (40).

Although not shown, the electric motor (20) has an introduction passage that introduces the refrigerant (W) from the outside of the casing (24) into the refrigerant passage (40) in the casing (24).

In the compressor (10), the refrigerant (W) compressed by the compression mechanism (30) is the same as the refrigerant (W) for cooling the rotor (22) and the stator (23) of the electric motor (20).

### (Advantages)

The refrigerant (W) is more easily supplied to the gap (A) between the rotor (22) and the stator (23) of the electric motor (20), and thus it is possible to cool the rotor (22) and the stator (23) of the electric motor (20) effectively.

The refrigerant (W) flows into the shaft passage (50) from the rear shaft end surface (21a) of the drive shaft (21), and then flows in the shaft passage (50) from the rear side (X1) to the front side (X2) in the axial direction (X). It is possible for the refrigerant (W) to smoothly flow into the shaft passage (50).

The refrigerant (W) flows from the shaft passage (50) into the communication passages (60), and then flows in the communication passages (60) from the inner peripheral side (R2) to the outer peripheral side (R1) in the radial direction (R) by centrifugal force of the drive shaft (21) and the rotor (22). The refrigerant (W) is supplied from the outer peripheral surface (22a) of the rotor (22) to the gap (A) between the rotor (22) and the stator (23). It is possible to smoothly supply the refrigerant (W) to the gap (A) between the rotor (22) and the stator (23) of the electric motor (20).

The first communication passage (60a) is disposed at 1/4L or more from the rear rotor end surface (22b) toward the front rotor end surface (22c) of the rotor (22) in the axial direction (X). It is possible for the refrigerant (W) to cool the rotor (22) and the stator (23) even in a region a long away from the rear shaft end surface (21a) of the drive shaft (21) (the inlet opening at the rear end (51) of the shaft passage (50)) toward the front side (X2) in the axial direction (X).

The communication passages (60) are disposed on both the rear side (X1) and the front side (X2) with respect to the center (22m) of the rotor (22) in the axial direction (X). It is possible for the refrigerant (W) to cool the rotor (22) and the stator (23) in both the region on the rear side (X1) and the region on the front side (X2) with respect to the center (22m) of the rotor (22) in the axial direction (X).

The refrigerant (W) before flowing into the refrigerant passage (40) is cooled by the condenser (2) as a cooler, which advantageously allows the refrigerant (W) to cool the rotor (22) and the stator (23).

The refrigerant (W) compressed into a high-pressure state by the compressor (10) is introduced into the refrigerant passage (40). The refrigerant (W) is pushed into the refrigerant passage (40), and thus more easily flows in the refrigerant passage (40).

### <Second Embodiment>

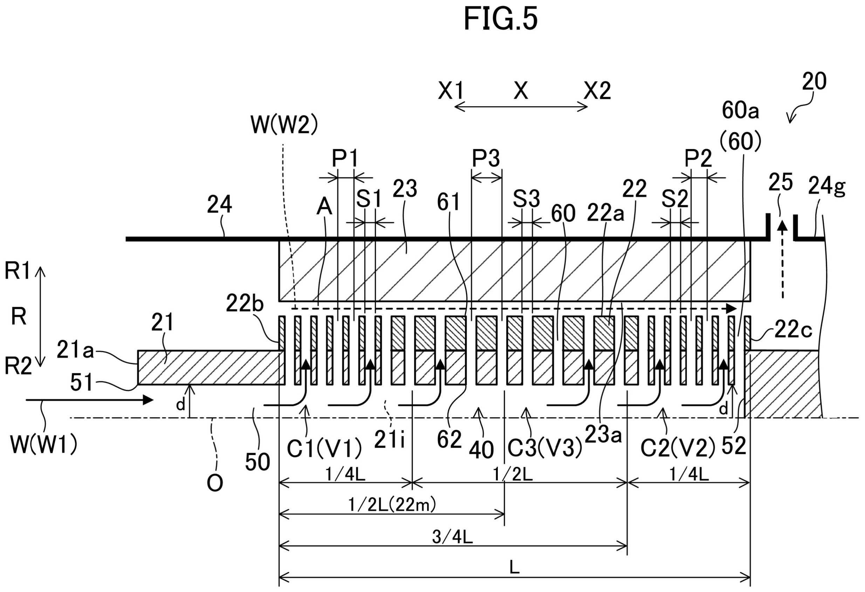

The second embodiment will be described. In the following description, the same components as those of the above embodiment are denoted by the same reference numerals, and their detailed descriptions are omitted. FIG. 5 is an enlarged cross-sectional view of an electric motor (20) of the second embodiment.

The length from the rear rotor end surface (22b) of the rotor (22) on the rear side (X1) in the axial direction (X) to the front rotor end surface (22c) of the rotor (22) on the front side (X2) in the axial direction (X) is defined as L.

The rotor (22) is divided into a first region (C1) defined at 1/4L from the rear rotor end surface (22b) toward the front rotor end surface (22c) in the axial direction (X); a second region (C2) defined at 1/4L from the front rotor end surface (22c) toward the rear rotor end surface (22b) in the axial direction (X); and a third region (C3) defined at 1/2L between the first region (C1) and the second region (C2).

A first passage volume (V1) of the communication passages (60) per unit length in the axial direction (X) in the first region (C1) and a second passage volume (V2) of the communication passages (60) per unit length in the axial direction (X) in the second region (C2) are larger than a third passage volume (V3) of the communication passages (60) per unit length in the axial direction (X) in the third region (C3).

The first passage volume (V1) is obtained by dividing the sum of passage volumes of all the communication passages (60) in the first region (C1) (the volumes of passages for the refrigerant (W) from the inlets (close to the shaft passage (50)) of the communication passages (60) to the outlets (close to the gap (A)) of the communication passages (60)) by the length 1/4L of the first region (C1) in the axial direction (X). The second passage volume (V2) is obtained by dividing the sum of passage volumes of all the communication passages (60) in the second region (C2) by the length 1/4L of the second region (C2) in the axial direction (X). The third passage volume (V3) is obtained by dividing the sum of passage volumes of all the communication passages (60) in the third region (C3) by the length 1/2L of the third region (C3) in the axial direction (X).

Specifically, a first pitch (P1) between the communication passages (60) adjacent in the axial direction (X) to each other in the first region (C1) and a second pitch (P2) between the communication passages (60) adjacent in the axial direction (X) to each other in the second region (C2) are smaller than a third pitch (P3) between the communication passages (60) adjacent in the axial direction (X) to each other in the third region (C3).

For example, each of the first pitch (P1), the second pitch (P2), and the third pitch (P3) is a pitch between the centers of the communication passages (60) adjacent in the axial direction (X) to each other.

A first average cross-sectional area (S1) of the communication passages (60) in the first region (C1), a second average cross-sectional area (S2) of the communication passages (60) in the second region (C2), and a third average cross-sectional area (S3) of the communication passages (60) in the third region (C3) are equal to each other.

The first average cross-sectional area (S1) is an area obtained by dividing the sum of the cross-sectional areas of all the communication passages (60) in the first region (C1) by the number of communication passages (60) in the first region (C1). The second average cross-sectional area (S2) is an area obtained by dividing the sum of the cross-sectional areas of all the communication passages (60) in the second region (C2) by the number of communication passages (60) in the second region (C2). The third average cross-sectional area (S3) is an area obtained by dividing the sum of the cross-sectional areas of all the communication passages (60) in the third region (C3) by the number of communication passages (60) in the third region (C3). The "cross-sectional area" referred to herein means the area of the cross section of the communication passage (60) perpendicular to the direction in which the refrigerant (W) flows (so-called "transverse section").

More specifically, the transverse section of the communication passage (60) is formed in a circular shape. The diameter of the communication passage (60) in the first region (C1), the diameter of the communication passage (60) in the second region (C2), and the diameter of the communication passage (60) in the third region (C3) are equal to each other.

The other configurations are the same as those of the first embodiment.

By making the first passage volume (V1) and the second passage volume (V2) larger than the third passage volume (V3), it is possible to intensively supply the refrigerant (W) to the gap (A) between the rotor (22) and the stator (23) in the first region (C1) and the second region (C2) as compared with the third region (C3). This is effective particularly when it is necessary to intensively cool the rotor (22) and the stator (23) of the electric motor (20) in the first region (C1) and the second region (C2) as compared with the third region (C3).

By making the first pitch (P1) and the second pitch (P2) smaller than the third pitch (P3), it is possible to easily make the first passage volume (V1) and the second passage volume (V2) larger than the third passage volume (V3).

### <Third Embodiment>

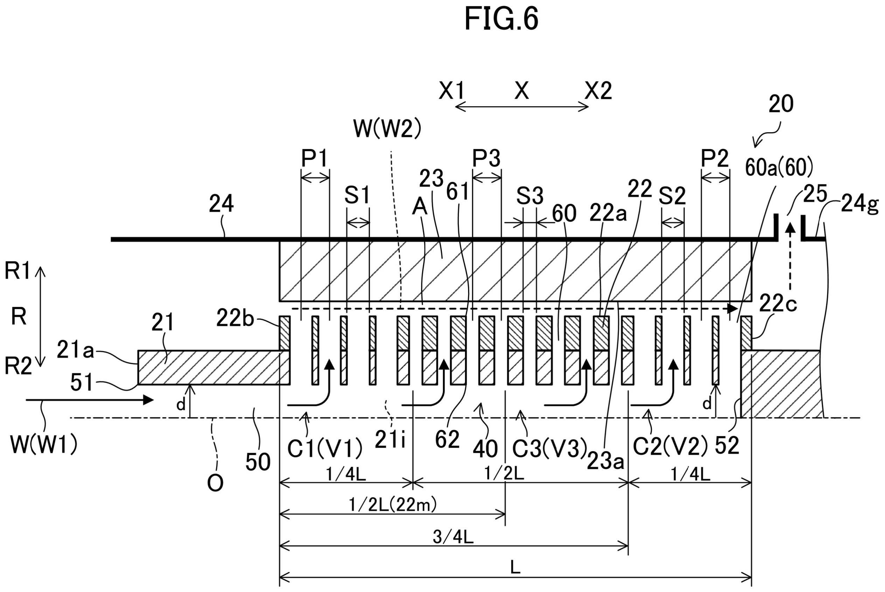

The third embodiment will be described. In the following description, the same components as those of the above embodiment are denoted by the same reference numerals, and their detailed descriptions are omitted. FIG. 6 is an enlarged cross-sectional view of an electric motor (20) of the third embodiment.

A first passage volume (V1) of the communication passages (60) per unit length in the axial direction (X) in the first region (C1) and a second passage volume (V2) of the communication passages (60) per unit length in the axial direction (X) in the second region (C2) are larger than a third passage volume (V3) of the communication passages (60) per unit length in the axial direction (X) in the third region (C3).

A first pitch (P1) between the communication passages (60) adjacent in the axial direction (X) to each other in the first region (C1), a second pitch (P2) between the communication passages (60) adjacent in the axial direction (X) to each other in the second region (C2), and a third pitch (P3) between the communication passages (60) adjacent in the axial direction (X) to each other in the third region (C3) are equal to each other.

A first average cross-sectional area (S1) of the communication passages (60) in the first region (C1) and a second average cross-sectional area (S2) of the communication passages (60) in the second region (C2) are larger than a third average cross-sectional area (S3) of the communication passages (60) in the third region (C3).

More specifically, the transverse section of the communication passage (60) is formed in a circular shape. The diameter of the communication passage (60) in the first region (C1) and the diameter of the communication passage (60) in the second region (C2) are larger than the diameter of the communication passage (60) in the third region (C3).

The other configurations are the same as those of the second embodiment.

By making the first passage volume (V1) and the second passage volume (V2) larger than the third passage volume (V3), it is possible to intensively supply the refrigerant (W) to the gap (A) between the rotor (22) and the stator (23) in the first region (C1) and the second region (C2) as compared with the third region (C3). This is effective particularly when it is necessary to intensively cool the rotor (22) and the stator (23) of the electric motor (20) in the first region (C1) and the second region (C2) as compared with the third region (C3).

By making the first average cross-sectional area (S1) and the second average cross-sectional area (S2) larger than the third average cross-sectional area (S3), it is possible to easily make the first passage volume (V1) and the second passage volume (V2) larger than the third passage volume (V3).

### <Fourth Embodiment>

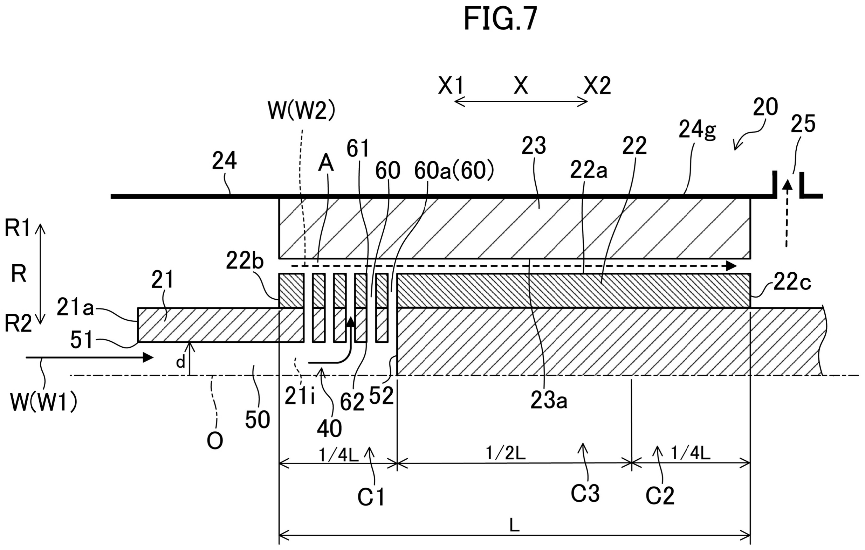

The fourth embodiment will be described. In the following description, the same components as those of the above embodiment are denoted by the same reference numerals, and their detailed descriptions are omitted. FIG. 7 is an enlarged cross-sectional view of an electric motor (20) of the fourth embodiment.

A front inner wall of a first communication passage (60a), the one of the communication passages (60) that is most distant from the rear rotor end surface (22b) toward the front rotor end surface (22c) of the rotor (22) in the axial direction (X), is disposed at 1/4L from the rear rotor end surface (22b) toward the front rotor end surface (22c) of the rotor (22) in the axial direction (X).

The number of communication passages (60) is two or more. The plurality of communication passages (60) are arranged side by side in the axial direction (X). The plurality of communication passages (60) may be arranged side by side in the circumferential direction of the axis (O) (see FIG. 4).

The communication passages (60) are disposed in only the first region (C1).

That is, the communication passages (60) are disposed in only the vicinity of the rear rotor end surface (22b). It is possible to reduce the number of holes bored in the rotor (22) to form the communication passages (60), and thus it is possible to reduce a reduction in the volume of the magnet, and also it is possible to reduce deterioration in the performance of the electric motor (20).

The other configurations are the same as those of the first embodiment.

### <Fifth Embodiment>

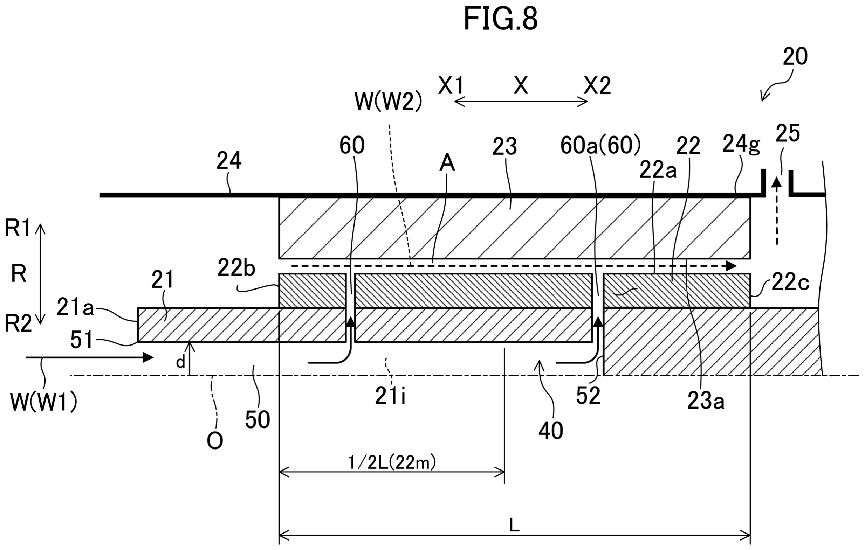

The fifth embodiment will be described. In the following description, the same components as those of the above embodiment are denoted by the same reference numerals, and their detailed descriptions are omitted. FIG. 8 is an enlarged cross-sectional view of an electric motor (20) of the fifth embodiment.

The number of communication passages (60) in the axial direction is only two. The plurality of communication passages (60) may be arranged side by side in the circumferential direction of the axis (O) (see FIG. 4 of the first embodiment). The communication passages (60) are disposed on both the rear side (X1) and the front side (X2) with respect to the center (22m) (1/2L) of the rotor (22) in the axial direction (X).

The other configurations are the same as those of the first embodiment.

### <Sixth Embodiment>

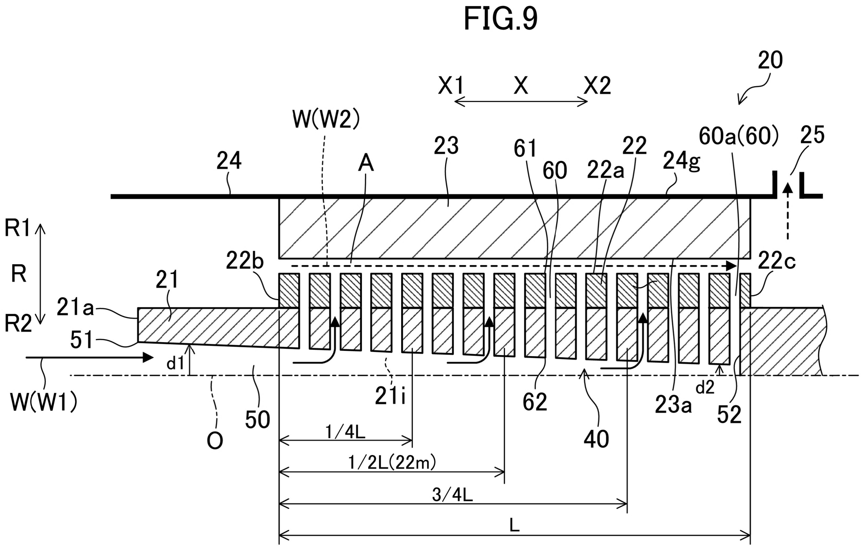

The sixth embodiment will be described. In the following description, the same components as those of the above embodiment are denoted by the same reference numerals, and their detailed descriptions are omitted. FIG. 9 is an enlarged cross-sectional view of an electric motor (20) of the sixth embodiment.

The shaft passage (50) is formed in a tapered shape. The diameter of the shaft passage (50) in a tapered shape gradually decreases from the rear side (X1) to the front side (X2) in the axial direction (X). A front end diameter (d2) of the front end (52) of the shaft passage (50) is smaller than a rear end diameter (d1) of the rear end (51) of the shaft passage (50).

The other configurations are the same as those of the first embodiment.

It is possible to squeeze the refrigerant (W) as the refrigerant (W) flows in the shaft passage (50) from the rear side (X1) to the front side (X2). It is possible to reduce the restriction of the refrigerant (W) sent from the shaft passage (50) to the communication passages (60) due to the pressure of the refrigerant (W) decreasing on the front side (X2) of the shaft passage (50).

### <Seventh Embodiment>

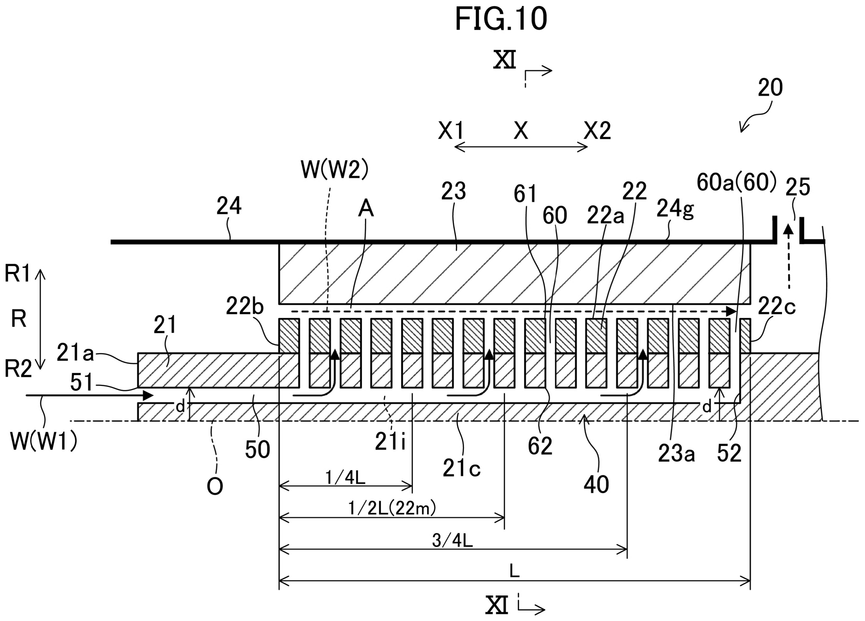

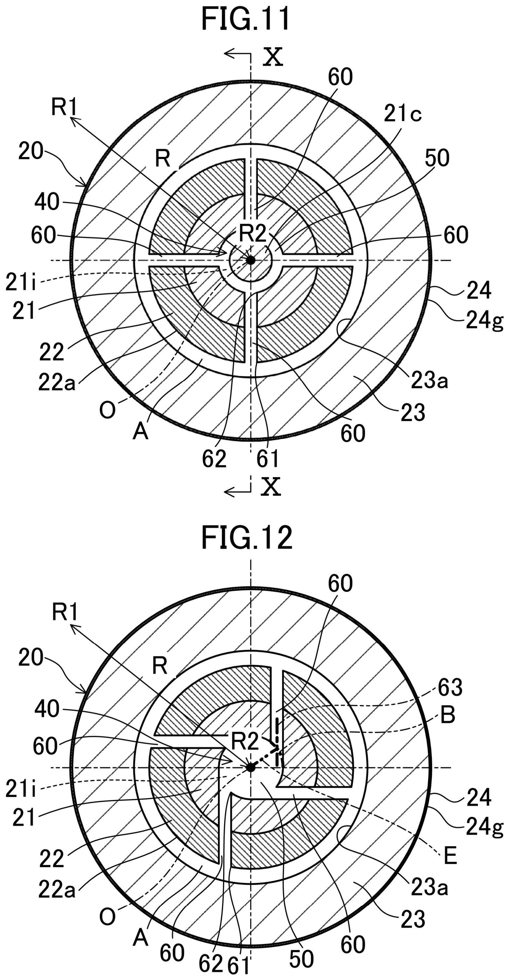

The seventh embodiment will be described. In the following description, the same components as those of the above embodiment are denoted by the same reference numerals, and their detailed descriptions are omitted. FIG. 10 is an enlarged cross-sectional view of an electric motor (20) (taken along line X in FIG. 11) of the seventh embodiment. FIG. 11 is a cross-sectional view of the electric motor (20) of the seventh embodiment (taken along line XI in FIG. 10) as viewed in an axial direction (X).

The axis (O) of the drive shaft (21) is filled with a thick portion (21c) extending in the axial direction (X). The shaft passage (50) is disposed on the outer peripheral side (R1) than the axis (O) (the thick portion (21c)) of the drive shaft (21). As viewed in the axial direction (X), the shaft passage (50) is formed in a ring shape to surround the axis (O) (the thick portion (21c)) of the drive shaft (21).

The other configurations are the same as those of the first embodiment.

The axis (O) of the drive shaft (21) surrounded by the shaft passage (50) in a ring shape is configured as the thick portion (21c). It is possible to secure the strength of the drive shaft (21).

### <Eighth Embodiment>

The eighth embodiment will be described. In the following description, the same components as those of the above embodiment are denoted by the same reference numerals, and their detailed descriptions are omitted. FIG. 12 is an enlarged cross-sectional view of an electric motor (20) of the eighth embodiment as viewed in the axial direction (X).

As viewed in the axial direction (X), the communication passages (60) extend to intersect a straight line (E) that extends from the axis (O) of the drive shaft (21) to the joint part (B) between the communication passages (60) and the shaft passage (50). The extension line (63) of the communication passages (60) toward the inner peripheral side (R2) does not intersect the axis (O) of the drive shaft (21).

The other configurations are the same as those of the first embodiment.

By changing the direction of the refrigerant (W) that flows in the communication passages (60), it is possible to apply not only the centrifugal force of the drive shaft (21) and the rotor (22) but also the shaft power to the refrigerant (W) that flows in the communication passages (60). It is thus easier to supply the refrigerant (W) to the gap (A) between the rotor (22) and the stator (23).

### <Ninth Embodiment>

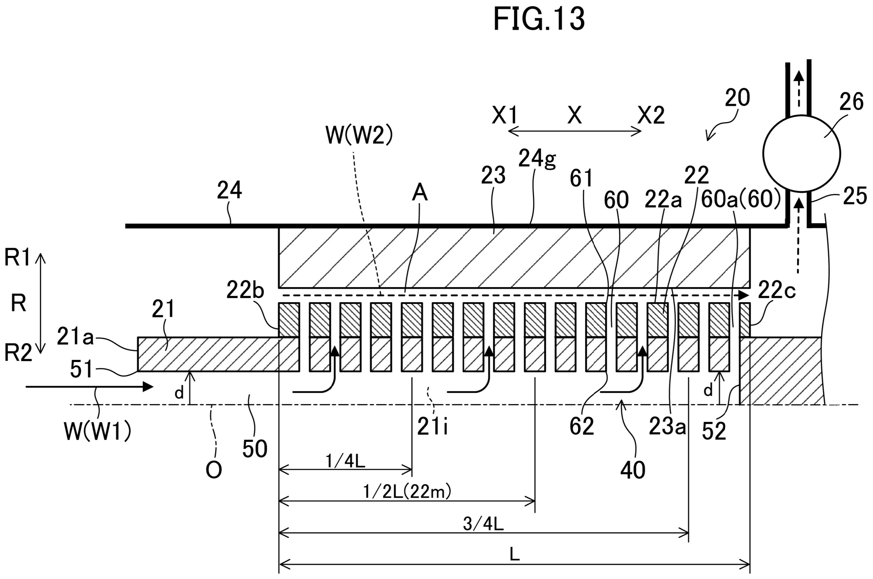

The ninth embodiment will be described. In the following description, the same components as those of the above embodiment are denoted by the same reference numerals, and their detailed descriptions are omitted. FIG. 13 is an enlarged cross-sectional view of an electric motor (20) of the ninth embodiment.

The casing (24) includes a discharge passage (25). The discharge passage (25) is a discharge pipe provided on the outer peripheral wall (24g) of the casing (24). The discharge passage (25) extends in the radial direction (R). The discharge passage (25) is disposed on the outer peripheral side (R1) than the outer peripheral surface (22a) of the rotor (22). The discharge passage (25) discharges the refrigerant (W) flowing from the refrigerant passage (40). The discharge passage (25) is provided with a pump (26). The pump (26) accelerates discharge of the refrigerant (W) flowing from the refrigerant passage (40). The pump (26) is a booster pump, for example.

The other configurations are the same as those of the first embodiment.

Due to the pump (26), it is possible to smoothly discharge the refrigerant (W) from the refrigerant passage (40) through the discharge passage (25).

### <Tenth Embodiment>

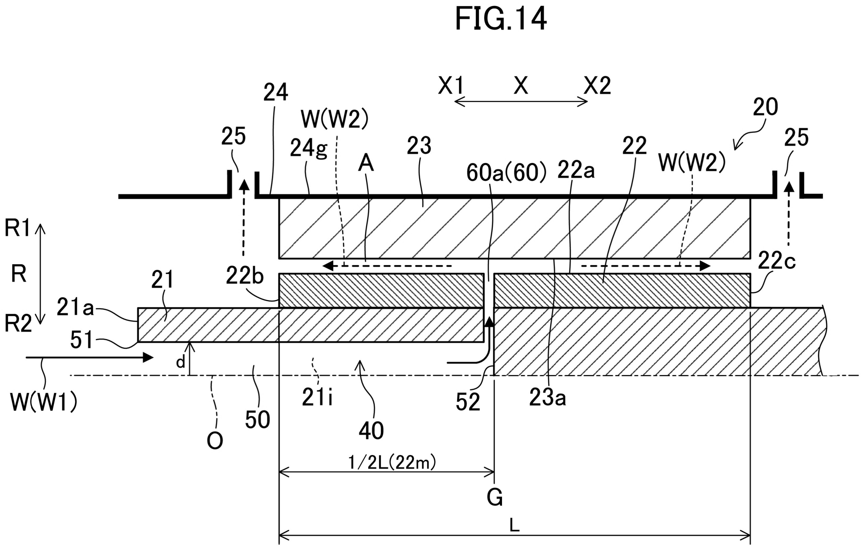

The tenth embodiment will be described. In the following description, the same components as those of the above embodiment are denoted by the same reference numerals, and their detailed descriptions are omitted. FIG. 14 is an enlarged cross-sectional view of an electric motor (20) of the tenth embodiment.

The number of communication passages (60) in the axial direction is only one. The communication passages (60) are disposed only at one particular position (G) in the axial direction (X). The particular position (G) is a position specified (designated) in the axial direction (X). The particular position (G) is a particular position in the axial direction. The number of particular position (G) is only one. The plurality of communication passages (60) may be arranged side by side in the circumferential direction of the axis (O) (see FIG. 4 of the first embodiment).

In this embodiment, the particular position (G) is the center (22m) (1/2L) in the axial direction (X). The communication passages (60) are disposed at the center (22m) (1/2L) as the particular position (G) of the rotor (22) in the axial direction (X). The discharge passage (25) is provided on the outer peripheral wall (24g) of the casing (24). The discharge passage (25) is disposed on the outer peripheral side (R1) than the outer peripheral surface (22a) of the rotor (22).

The number of discharge passages (25) is two. The two discharge passages (25) are disposed apart from each other in the axial direction (X). The discharge passage (25) on the rear side (X1) is disposed on the rear side (X1) than the rear rotor end surface (22b) of the rotor (22) in the axial direction (X). The discharge passage (25) on the front side (X2) is disposed on the front side (X2) than the front rotor end surface (22c) of the rotor (22) in the axial direction (X).

The refrigerant (W) having flowed out of the outer peripheral surface (22a) of the rotor (22) to the gap (A) is divided into two ways, and flows in the gap (A) toward the rear side (X1) and the front side (X2) in the axial direction (X). The refrigerant (W) flows into the discharge passage (25) on the rear side (X1) and the discharge passage (25) on the front side (X2) formed in the outer peripheral wall (24g) of the casing (24).

The other configurations are the same as those of the first embodiment.

The communication passages (60) are disposed only at one particular position (G) in the axial direction (X). It is possible to reduce the number of holes bored in the rotor (22) to form the communication passages (60), and thus it is possible to reduce a reduction in the volume of the magnet, and also it is possible to reduce deterioration in the performance of the electric motor (20).

### <Eleventh Embodiment>

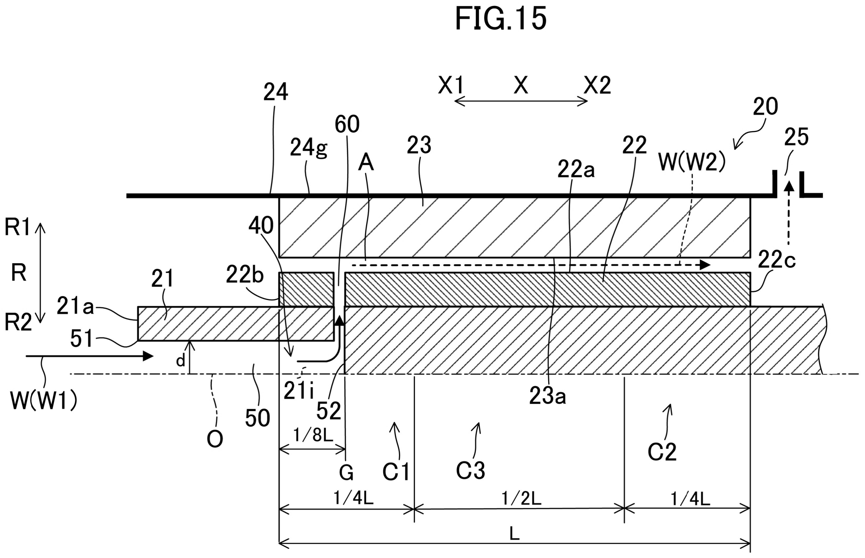

The eleventh embodiment will be described. In the following description, the same components as those of the above embodiment are denoted by the same reference numerals, and their detailed descriptions are omitted. FIG. 15 is an enlarged cross-sectional view of an electric motor (20) of the eleventh embodiment.

The length from the rear rotor end surface (22b) of the rotor (22) on the rear side (X1) in the axial direction (X) to the front rotor end surface (22c) of the rotor (22) on the front side (X2) in the axial direction (X) is defined as L.

The rotor (22) is divided into a first region (C1) defined at 1/4L from the rear rotor end surface (22b) toward the front rotor end surface (22c) in the axial direction (X); a second region (C2) defined at 1/4L from the front rotor end surface (22c) toward the rear rotor end surface (22b) in the axial direction (X); and a third region (C3) defined at 1/2L between the first region (C1) and the second region (C2).

The communication passages (60) are disposed in only the first region (C1) in the axial direction (X).

In the first region (C1) (1/4L from the rear rotor end surface (22b)), the communication passages (60) are disposed in a region at 1/8L or less from the rear rotor end surface (22b) in one preferred embodiment. The communication passages (60) are disposed in preferably a region at 1 mm to 50 mm from the rear rotor end surface (22b), more preferably a region at 5 mm to 50 mm from the rear rotor end surface (22b), and further preferably a region at 10 mm to 20 mm from the rear rotor end surface (22b).

The number of communication passages (60) in the axial direction (X) is only one. The communication passages (60) are disposed only at one particular position (G) in the axial direction (X). The plurality of communication passages (60) may be arranged side by side in the circumferential direction of the axis (O) (see FIG. 4 of the first embodiment).

In this embodiment, in the first region (C1) (1/4L from the rear rotor end surface (22b)), the particular position (G) is disposed at 1/8L from the rear rotor end surface (22b) in the axial direction (X).

The discharge passage (25) is provided on the outer peripheral wall (24g) of the casing (24). The discharge passage (25) is disposed on the outer peripheral side (R1) than the outer peripheral surface (22a) of the rotor (22). The discharge passage (25) is disposed on the front side (X2) than the front rotor end surface (22c).

The other configurations are the same as those of the first embodiment.

Since the communication passages (60) are disposed in only the first region (C1), the communication passages (60) are disposed in only the vicinity of the rear rotor end surface (22b). It is possible to reduce the number of holes bored in the rotor (22) to form the communication passages (60), and thus it is possible to reduce a reduction in the volume of the magnet, and also it is possible to reduce deterioration in the performance of the electric motor (20).

The communication passages (60) are disposed only at one particular position (G) in the axial direction (X). It is possible to reduce the number of holes bored in the rotor (22) to form the communication passages (60), and thus it is possible to reduce a reduction in the volume of the magnet, and also it is possible to reduce deterioration in the performance of the electric motor (20).

The refrigerant (W) having flowed out of the outer peripheral surface (22a) of the rotor (22) to the gap (A) flows in the gap (A) toward the front side (X2) in the axial direction (X). The refrigerant (W) flows into the discharge passage (25) provided in the outer peripheral wall (24g) of the casing (24) (and disposed on the front side (X2) than the front rotor end surface (22c)).

The discharge passage (25) and the communication passages (60) are provided opposite in the axial direction (X), whereby it is easier to supply the refrigerant (W) to the gap (A) between the rotor (22) and the stator (23).

### <Twelfth Embodiment>

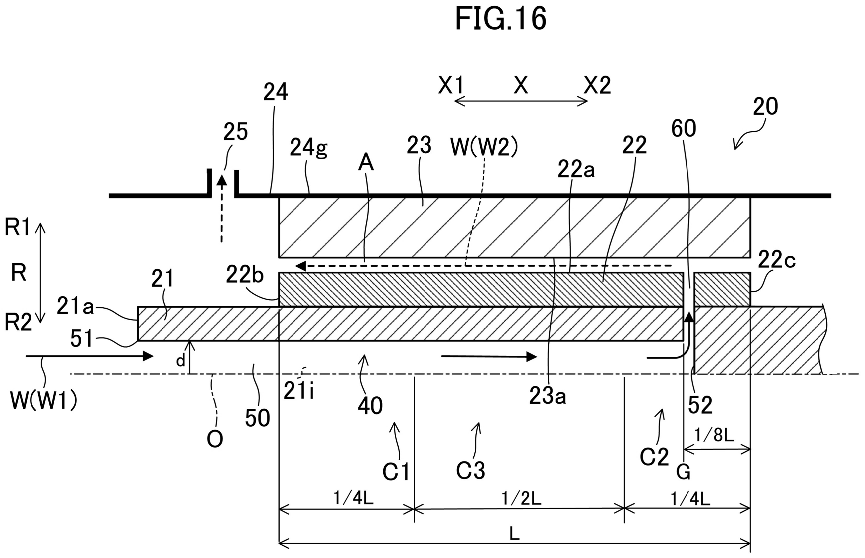

The twelfth embodiment will be described. In the following description, the same components as those of the above embodiment are denoted by the same reference numerals, and their detailed descriptions are omitted. FIG. 16 is an enlarged cross-sectional view of an electric motor (20) of the twelfth embodiment.

The communication passages (60) are disposed in only the second region (C2) in the axial direction (X).

In the second region (C2) (1/4L from the front rotor end surface (22c)), the communication passages (60) are disposed in a region at 1/8L or less from the front rotor end surface (22c) in one preferred embodiment. The communication passages (60) are disposed in preferably a region at 1 mm to 50 mm from the front rotor end surface (22c), more preferably a region at 5 mm to 50 mm from the front rotor end surface (22c), and further preferably a region at 10 mm to 20 mm from the front rotor end surface (22c).

The communication passages (60) are disposed only at one particular position (G) in the axial direction (X).

In this embodiment, in the second region (C2) (1/4L from the front rotor end surface (22c)), the particular position (G) is disposed at 1/8L from the front rotor end surface (22c) in the axial direction (X).

The discharge passage (25) is disposed on the rear side (X1) than the rear rotor end surface (22b).

The other configurations are the same as those of the eleventh embodiment.

Since the communication passages (60) are disposed in only the second region (C2), the communication passages (60) are disposed in only the vicinity of the front rotor end surface (22c). It is possible to reduce the number of holes bored in the rotor (22) to form the communication passages (60), and thus it is possible to reduce a reduction in the volume of the magnet, and also it is possible to reduce deterioration in the performance of the electric motor (20).

The communication passages (60) are disposed only at one particular position (G) in the axial direction (X). It is possible to reduce the number of holes bored in the rotor (22) to form the communication passages (60), and thus it is possible to reduce a reduction in the volume of the magnet, and also it is possible to reduce deterioration in the performance of the electric motor (20).

The refrigerant (W) having flowed out of the outer peripheral surface (22a) of the rotor (22) to the gap (A) flows in the gap (A) toward the rear side (X1) in the axial direction (X). The refrigerant (W) flows into the discharge passage (25) provided in the outer peripheral wall (24g) of the casing (24) (and disposed on the rear side (X1) than the rear rotor end surface (22b)).

The discharge passage (25) and the communication passages (60) are provided opposite in the axial direction (X), whereby it is easier to supply the refrigerant (W) to the gap (A) between the rotor (22) and the stator (23).

### <Other Embodiments>

The first communication passage (60a) may be disposed on the rear side (X1) than the position at 1/4L from the rear rotor end surface (22b) toward the front rotor end surface (22c) of the rotor (22) in the axial direction (X).

Only one of the first passage volume (V1) and the second passage volume (V2) may be larger than the third passage volume (V3). In other words, either the first passage volume (V1) or the second passage volume (V2) may be larger than the third passage volume (V3). Only one of the first average cross-sectional area (S1) and the second average cross-sectional area (S2) may be larger than the third average cross-sectional area (S3). In other words, either the first average cross-sectional area (S1) or the second average cross-sectional area (S2) may be larger than the third average cross-sectional area (S3). Only one of the first pitch (P1) and the second pitch (P2) may be smaller than the third pitch (P3). In other words, either the first pitch (P1) or the second pitch (P2) may be smaller than the third pitch (P3).

The shaft passage (50) may be open to the outer peripheral surface (22a) of the rotor (22) that is close to the rear end portion of the rotor (22) in the axial direction (X).

The refrigerant (W) before flowing into the refrigerant passage (40) may be cooled by a cooler provided instead of the condenser (2). No cooler may be provided.

The transverse section of the communication passage (60) is not limited to a circular shape, and may be a polygonal shape, for example.

The compressor (10) is not limited to a turbo compressor, and may be a scroll compressor or a screw compressor, for example.

While the embodiments have been described above, it will be understood that various changes in form and details can be made without departing from the spirit and scope of the claims. The elements according to the embodiments, the variations thereof, and the other embodiments may be combined and replaced with each other.

The expressions of "first," "second," "third," . . . , in the specification and claims are used to distinguish the terms to which these expressions are given, and do not limit the number and order of the terms.

### DESCRIPTION OF REFERENCE CHARACTERS

- X: Axial Direction
- X1: Rear Side (First Direction Side)
- X2: Front Side (Second Direction Side)
- R: Radial Direction
- R1: Outer Peripheral Side
- R2: Inner Peripheral Side
- d: Diameter
- d1: Rear End Diameter
- d2: Front End Diameter
- C1: First Region
- C2: Second Region
- C3: Third Region
- V1: First Passage Volume
- V2: Second Passage Volume
- V3: Third Passage Volume
- P1: First Pitch
- P2: Second Pitch
- P3: Third Pitch
- S1: First Average Cross-Sectional Area
- S2: Second Average Cross-Sectional Area
- S3: Third Average Cross-Sectional Area
- B: Joint part
- E: Straight Line
- L: Length
- O: Axis
- A: Gap
- W: Refrigerant
- W1: High-Pressure Refrigerant
- W2: Low-Pressure Refrigerant
- G: Particular Position
- 1: Refrigeration Apparatus
- 2: Condenser (Cooler)
- 3: Decompression Mechanism
- 4: Evaporator
- 10: Compressor
- 20: Electric Motor
- 21: Drive Shaft
- 21a: Rear Shaft End Surface (First Shaft End Surface)
- 21b: Front Shaft End Surface
- 21c: Thick Portion
- 21i: Interior
- 22: Rotor
- 22a: Outer Peripheral Surface
- 22b: Rear Rotor End Surface (First Rotor End Surface)
- 22c: Front Rotor End Surface (Second Rotor End Surface)
- 22m: Center
- 23: Stator
- 23a: Inner Peripheral Surface
- 24: Casing
- 24a: Wall
- 24b: Impeller Chamber
- 24c: Electric Motor Chamber
- 24d: Suction Pipe
- 24e: Discharge Pipe
- 24f: Compression Space
- 24g: Outer Peripheral Wall
- 25: Discharge Passage
- 26: Pump
- 27: Touchdown Bearing
- 28: Thrust Magnetic Bearing
- 28a: Electromagnet
- 28b: Disk
- 30: Compression Mechanism
- 31: Impeller
- 40: Refrigerant Passage
- 50: Shaft Passage
- 51: Rear End
- 52: Front End
- 60: Communication Passage
- 60a: First Communication Passage
- 61: Outer End
- 62: Inner End
- 63: Extension Line

## Claims

1. A compressor configured to compress a refrigerant (W), the compressor comprising:
an electric motor (20); and
a compression mechanism (30) operated by the electric motor (20),
wherein
the compression mechanism (30) includes an impeller (31) rotated by the electric motor (20),
the electric motor (20) includes
a drive shaft (21),
a rotor (22) fixed to the drive shaft (21), and
a stator (23) disposed on an outer peripheral side (R1) than the rotor (22),
the drive shaft (21) and the rotor (22) include a refrigerant passage (40) in which the refrigerant (W) flows, and
the refrigerant passage (40) includes
a shaft passage (50) extending in an interior (21i) of the drive shaft (21) from a first direction side (X1) in an axial direction (X) to a second direction side (X2) in the axial direction (X) which is opposite to the first direction side (X1) and on which the impeller (31) is disposed, and
a communication passage (60) communicating a gap (A) between the rotor (22) and the stator (23) with the shaft passage (50).

2. The compressor of claim 1, wherein
the shaft passage (50) is open to a first shaft end surface (21a) of the drive shaft (21) on the first direction side (X1) in the axial direction (X).

3. The compressor of claim 1 or 2, wherein
the communication passage (60) is open to an outer peripheral surface (22a) of the rotor (22).

4. The compressor of any one of claims 1 to 3, wherein
if a length from a first rotor end surface (22b) of the rotor (22) on the first direction side (X1) in the axial direction (X) to a second rotor end surface (22c) of the rotor (22) on the second direction side (X2) in the axial direction (X) is defined as L, and
if the rotor (22) is divided into a first region (C1) defined at 1/4L from the first rotor end surface (22b) toward the second rotor end surface (22c) in the axial direction (X); a second region (C2) defined at 1/4L from the second rotor end surface (22c) toward the first rotor end surface (22b) in the axial direction (X); and a third region (C3) defined at 1/2L between the first region (C1) and the second region (C2),
a first passage volume (V1) of the communication passage (60) per unit length in the axial direction (X) in the first region (C1) or a second passage volume (V2) of the communication passage (60) per unit length in the axial direction (X) in the second region (C2) is larger than a third passage volume (V3) of the communication passage (60) per unit length in the axial direction (X) in the third region (C3).

5. The compressor of claim 4, wherein
a first average cross-sectional area (S1) of the communication passage (60) in the first region (C1) or a second average cross-sectional area (S2) of the communication passage (60) in the second region (C2) is larger than a third average cross-sectional area (S3) of the communication passage (60) in the third region (C3).

6. The compressor of claim 4, wherein
a first pitch (P1) between the communication passages (60) adjacent in the axial direction (X) to each other in the first region (C1) or a second pitch (P2) between the communication passages (60) adjacent in the axial direction (X) to each other in the second region (C2) is smaller than a third pitch (P3) between the communication passages (60) adjacent in the axial direction (X) to each other in the third region (C3).

7. The compressor of any one of claims 2 to 6, wherein
if a length from a first rotor end surface (22b) of the rotor (22) on the first direction side (X1) in the axial direction (X) to a second rotor end surface (22c) of the rotor (22) on the second direction side (X2) in the axial direction (X) is defined as L, the communication passage (60) that is most distant from the first rotor end surface (22b) toward the second rotor end surface (22c) of the rotor (22) in the axial direction (X) is disposed at 1/4L or more from the first rotor end surface (22b) toward the second rotor end surface (22c) of the rotor (22) in the axial direction (X).

8. The compressor of any one of claims 1 to 7, wherein
the communication passages (60) are disposed on both the first direction side (X1) and the second direction side (X2) with respect to a center (22m) of the rotor (22) in the axial direction (X).

9. The compressor of any one of claims 1 to 8, wherein
as viewed in the axial direction (X), the communication passage (60) extends to intersect a straight line (E) that extends from an axis (O) of the drive shaft (21) to a joint part (B) between the communication passage (60) and the shaft passage (50).

10. The compressor of any one of claims 1 to 9, wherein
as viewed in the axial direction (X), the shaft passage (50) is formed in a ring shape to surround an axis (O) of the drive shaft (21).

11. The compressor of any one of claims 1 to 10, wherein
the shaft passage (50) is formed in a tapered shape so that a diameter of the shaft passage (50) gradually decreases from the first direction side (X1) to the second direction side (X2) in the axial direction.

12. The compressor of any one of claims 1 to 11, wherein
the electric motor (20) includes a casing (24) that houses the drive shaft (21), the rotor (22), and the stator (23),
the casing (24) includes a discharge passage (25) that discharges the refrigerant (W) flowing from the refrigerant passage (40), and
the discharge passage (25) is provided with a pump (26) that accelerates discharge of the refrigerant (W).

13. The compressor of any one of claims 1 to 12, comprising:
a cooler (2) configured to cool the refrigerant (W) before the refrigerant (W) flows into the refrigerant passage (40).

14. The compressor of any one of claims 1 to 13, wherein
the communication passage (60) is disposed only at one particular position (G) in the axial direction (X).

15. The compressor of any one of claims 1 to 14, wherein
if a length from a first rotor end surface (22b) of the rotor (22) on the first direction side (X1) in the axial direction (X) to a second rotor end surface (22c) of the rotor (22) on the second direction side (X2) in the axial direction (X) is defined as L, and
if the rotor (22) is divided into a first region (C1) defined at 1/4L from the first rotor end surface (22b) toward the second rotor end surface (22c) in the axial direction (X); a second region (C2) defined at 1/4L from the second rotor end surface (22c) toward the first rotor end surface (22b) in the axial direction (X); and a third region (C3) defined at 1/2L between the first region (C1) and the second region (C2),
the communication passage (60) is disposed in only the first region (C1) or only the second region (C2).

16. A refrigeration apparatus comprising the compressor (10) of any one of claims 1 to 15.
